# DEMANDE DE BREVET EUROPEEN

(11) **EP 4 485 797 A1**
(43) Date de publication de la demande: **01.01.2025**
(21) Numéro de dépôt: 23182856.7
(22) Date de dépôt: 30.06.2023
(51) Int. Cl.: H02S 40/42, H02S 20/23, H02S 40/44

(54) **INSTALLATION À PRODUCTION D'ÉNERGIE**

(71) Demandeur: Tonomia S.r.l., 4651 Battice (BE)
(72) Inventeur: Belhabib, Mustapha, 4651 Battice (BE)
(74) Mandataire: Condorcet IP

(57) **Abrégé**

L'invention a pour objet une installation (1) à production d'énergie configurée pour être installée notamment sur un sol, notamment sur un parking, et comportant un pilier central (2) configuré pour porter au moins un toit (3) pourvu d'au moins un panneau solaire (4), le toit (3) comportant au moins un canal de circulation d'air (7) s'étendant au moins partiellement sous le panneau solaire (4) pour permettre à l'air dans le canal d'être chauffé par la chaleur dégagée par le panneau solaire (4).

## Description

L'invention concerne une installation à production d'énergie pour être installée sur un sol, notamment sur un parking.

L'énergie solaire est une source d'énergie renouvelable sans limitation d'approvisionnement. Cependant les coûts de fabrication et d'exploitation peuvent impacter l'intérêt pour l'utilisation d'énergie solaire. Par ailleurs, le réseau électrique se retrouve souvent saturé en été, d'où la nécessité d'installer une capacité de stockage suffisante non seulement pour l'énergie autoproduite mais également offrir une possibilité pour équilibrer le réseau.

La présente invention vise notamment à améliorer les installations à production d'énergie solaire, en termes de production et de stockage.

L'invention a ainsi pour objet une installation à production d'énergie configurée pour être installée notamment sur un sol, et notamment comportant un pilier central configuré pour porter au moins un toit pourvu d'au moins un panneau solaire, le toit comportant notamment au moins un canal de circulation d'air s'étendant au moins partiellement sous le panneau solaire pour permettre à l'air dans le canal d'être chauffé par la chaleur dégagée par le panneau solaire.

Selon l'un des aspects de l'invention, le toit est réalisé en deux parties disposées de part et d'autre du pilier central.

Selon l'un des aspects de l'invention, les deux parties du toit sont parallèles. Les deux parties du toit peuvent être dans le prolongement l'une de l'autre.

Selon l'un des aspects de l'invention, les deux parties de toit s'étendent chacun suivant un plan incliné par rapport au pilier.

Autrement dit, le toit n'est pas perpendiculaire au pilier.

Selon l'un des aspects de l'invention, les deux parties de toit s'étendent suivant un plan commun incliné par rapport au pilier.

Selon l'un des aspects de l'invention, le plan commun est incliné par rapport au pilier d'un angle compris entre 70° et 90°, notamment d'un angle d'environ 85°.

Dans un autre exemple de réalisation de l'invention, les deux parties du toit s'étendent dans des plans respectifs qui sont sécants. Notamment ces deux parties du toit forment, en profil, un Y avec le pilier central.

Selon l'un des aspects de l'invention, les deux parties du toit sont espacées l'une de l'autre par une ouverture.

Selon l'un des aspects de l'invention, le haut du pilier s'étend à travers cette ouverture.

Selon l'un des aspects de l'invention, cette ouverture entre les deux parties de toit permet en outre au vent de s'écouler dans cette ouverture de sorte à casser les efforts que pourrait exercer un vent fort sur l'installation.

Selon l'un des aspects de l'invention, les deux parties du toit présente une superficie identique.

En variante, l'une des parties de toit peut présenter une superficie plus grande que pour l'autre partie du toit, ou une forme différente.

Selon l'un des aspects de l'invention, le toit présente un pourtour rectangulaire.

Selon l'un des aspects de l'invention, les deux parties du toit présente chacune un pourtour rectangulaire.

Selon l'un des aspects de l'invention, le toit comporte au moins un caisson configuré pour soutenir le ou les panneaux solaires. La largeur du caisson ainsi que celle des panneaux solaires sont ajustables (par exemple en étant modulaires) pour s'adapter aux normes de largeurs de places de parking, qui peuvent varier d'une région à une autre.

Selon l'un des aspects de l'invention, chaque partie du toit comporte son propre caisson sur lequel sont montés le ou les panneaux solaires.

Selon l'un des aspects de l'invention, le caisson comporte des appuis, notamment métalliques, sur lesquels sont posés les panneaux solaires. Par exemple, le caisson comporte des appuis notamment métalliques sur lesquels sont posés les panneaux solaires sur la partie supérieure et un panneau en laminé haute pression, ou autre matière biosourcée, sur la partie inférieure.

Selon l'un des aspects de l'invention, ces appuis sont formés par un rebord périphérique du caisson.

Selon l'un des aspects de l'invention, les appuis peuvent également être formé par des barreaux transversaux disposés à différents emplacements du caisson.

Selon l'un des aspects de l'invention, les barreaux transversaux d'appui sont rectilignes et disposés de manière parallèle et équidistantes entre elles.

Selon l'un des aspects de l'invention, l'ouverture entre les deux parties de toit est formée entre deux bords rectilignes parallèles en regard de ces parties de toit, et les barreaux transversaux sont parallèles à ces bords.

Selon l'un des aspects de l'invention, le ou les panneaux solaires reposent ainsi sur le rebord périphérique et sur les barreaux transversaux qui se trouvent alors sous les panneaux solaires.

Selon l'un des aspects de l'invention, chaque caisson comporte au moins une fente d'entrée d'air configurée pour permettre à de l'air de s'écouler à l'intérieur du caisson et de permettre à l'air d'être chauffé par le ou les panneaux solaires qui ferment le caisson. Une grille à mailles suffisamment fines est disposée sur les fentes d'entrée pour filtrer tout objet ou corps extérieur. Des barres transversales extérieures soutenant les caissons sont configurées pour protéger les fentes d'admission d'air contre l'infiltration d'eau de pluie.

Selon l'un des aspects de l'invention, la fente d'entrée d'air s'étend le long d'un bord du caisson.

Selon l'un des aspects de l'invention, chaque caisson comporte au moins deux fentes d'entrée d'air disposées le long de deux côtés opposés du caisson. Pour les panneaux d'extrémité, une fente supplémentaire pourrait être ajoutée. Les fentes peuvent être de mêmes dimensions ou différentes les unes des autres.

Selon l'un des aspects de l'invention, le caisson comporte une fente de collecte de l'air configurée pour permettre l'évacuation de l'air provenant de la fente ou des fentes d'entrée et ayant circulé dans le caisson en été chauffé par le ou les panneaux solaires.

Selon l'un des aspects de l'invention, la fente d'entrée d'air présente une forme longiligne.

Selon l'un des aspects de l'invention, la fente de collecte d'air présente une forme longiligne. Des fentes multiples, notamment de forme circulaire ou ovale, sont également envisageables.

Selon l'un des aspects de l'invention, l'une au moins des entrées d'air dans le caisson est formée par une ou plusieurs fentes d'entrée d'air qui sont de manière alignée le long d'un côté du caisson. D'autres fentes d'entrée secondaires peuvent être placées perpendiculairement aux fentes de collecte.

Selon l'un des aspects de l'invention, les fentes d'entrée d'air et la ou les fentes de collecte sont parallèles entre elles.

Selon l'un des aspects de l'invention, les fentes d'entrée d'air et la ou les fentes de collecte sont perpendiculaires aux barreaux transversaux d'appui pour les panneaux solaires.

Selon l'un des aspects de l'invention, la ou les fentes de collecte sont situées à équidistance des fentes d'entrée d'air.

Selon l'un des aspects de l'invention, l'installation comporte en outre une poutre longitudinale se raccordant au pilier central et la poutre longitudinale s'étend dans l'espace entre les deux parties du toit, notamment parallèlement aux deux bords en regard des deux parties de toit.

Selon l'un des aspects de l'invention, l'installation comporte encore une poutre transversale se raccordant au pilier central et portant les deux parties de toit.

Selon l'un des aspects de l'invention, l'installation comprend ainsi le pilier central qui porte la poutre longitudinale et la poutre transversale.

Il est ainsi possible de former l'installation avec un nombre total de pilier/poutres égal à trois. Ce nombre peut être de quatre en cas de poutres transversales distinctes, dédiées à chaque partie de toit.

Selon l'un des aspects de l'invention, la poutre longitudinale et la poutre transversale se croisent à angle droit.

Selon l'un des aspects de l'invention, la fente d'évacuation d'air dans le caisson du toit est ouverte sur la poutre transversale qui est creuse.

Selon l'un des aspects de l'invention, les poutres sont creuses ainsi que le pilier central, de sorte que l'air ayant circulé dans le caisson et qui est chauffé par le ou les panneaux solaires circule à travers la fente d'évacuation d'air en direction de la poutre transversale.

Selon l'un des aspects de l'invention, cette poutre transversale est creuse et forme ainsi, en entier ou en partie, un canal d'évacuation de l'air chauffé. Chaque poutre transversale peut être équipée d'un ventilateur pour évacuer l'air vers un conduit principal, notamment dans la poutre longitudinale.

Selon l'un des aspects de l'invention, ce canal d'évacuation dans la poutre transversale se prolonge dans la poutre longitudinale.

Selon l'un des aspects de l'invention, la poutre longitudinale est configurée pour évacuer l'air qui y circule vers un système de récupération de chaleur de l'air.

Selon l'un des aspects de l'invention, ce système comporte par exemple une pompe à chaleur placée par exemple dans un bâtiment pour le chauffer.

Selon l'un des aspects de l'invention, l'installation comporte un ventilateur, notamment un ventilateur électrique, configuré pour aspirer l'air vers le canal de circulation d'air dans la poutre longitudinale.

Selon l'un des aspects de l'invention, cette aspiration d'air permet de créer l'écoulement d'air depuis la ou les fentes d'entrée d'air sur le caisson du toit vers le canal de la poutre longitudinale.

Selon l'un des aspects de l'invention, le ventilateur est un ventilateur à pâles rotatives.

Selon l'un des aspects de l'invention, le ventilateur est placé au sein de la poutre longitudinale. D'autres ventilateurs peuvent être aussi placés sur chaque poutre transversale.

Selon l'un des aspects de l'invention, le pilier et/ou la poutre longitudinale et/ou la poutre transversale sont réalisées avec chacun un assemblage de plaques notamment à base de matériaux biosourcés, bois ou autres tel que des laminés à haute pression de papier et de résines destinés à des bardages extérieurs.

Selon l'un des aspects de l'invention, cet assemblage de plaques forment une enveloppe externe du pilier et/ou de la poutre longitudinale et/ou de la poutre transversale.

Selon l'un des aspects de l'invention, l'assemblage comporte en outre des éléments de poutre, notamment en bois, disposés de manière parallèles sur un contour par exemple rectangulaire, et entre lesquels sont disposées les plaques. Les éléments de poutre peuvent être également en acier, notamment pour le pilier central où l'échange de chaleur n'est pas critique.

Pour le pilier central, ces éléments de poutre mesurent par exemple 3 à 6 mètres ou plus.

Selon l'un des aspects de l'invention, dans l'espace intérieur de cette enveloppe, sont disposées des structures alvéolées, par exemple en matière plastique. Ceci permet de renforcer le pilier et/ou les poutres et, en même temps, de permettre une circulation d'air.

Selon l'un des aspects de l'invention, la structure alvéolée présente un pourtour rectangle ou carré.

Selon l'un des aspects de l'invention, la structure alvéolée présente une forme de grille ou en nid d'abeille.

Selon l'un des aspects de l'invention, la structure alvéolée occupe toute une section intérieure du pilier ou de la poutre.

Selon l'un des aspects de l'invention, plusieurs structures alvéolées sont prévues dans le pilier creux et/ou la poutre creuse, notamment à distance les unes des autres.

Selon l'un des aspects de l'invention, les structures alvéolées peuvent être en matière plastique renforcée, notamment avec des fibres de verre.

Selon l'un des aspects de l'invention, l'assemblage de plaques en bois est renforcé par des renforts, notamment des renforts métalliques.

Selon l'un des aspects de l'invention, les renforts métalliques sont sur une face externe de l'assemblage de plaques. En variante, les renforts métalliques peuvent être sur la face interne, notamment pour des raisons esthétiques ou fonctionnelles quand la conduction thermique n'est pas affectée.

Selon l'un des aspects de l'invention, les renforts métalliques peuvent représenter une forme en V ou en croix.

Selon l'un des aspects de l'invention, les renforts métalliques sont configurés pour renforcer mécaniquement le pilier et/ou la poutre longitudinale et/ ou la poutre transversale.

Selon l'un des aspects de l'invention, les renforts métalliques peuvent également servir pour interconnecter la poutre longitudinale et la poutre transversale au pilier central.

L'invention est particulièrement avantageuse car elle permet une double production d'énergie, à savoir une énergie sous forme électrique grâce aux panneaux solaires et une énergie sous forme de chaleur récupérée par la circulation d'air qui récupère la chaleur dégagée par les panneaux solaires.

Selon l'un des aspects de l'invention, l'énergie produite peut être utilisée pour des applications industrielles, commerciales ou résidentielles. L'installation selon l'invention peut être placée par exemple sur un parking, par exemple d'un centre commercial, d'une gare, d'un aéroport ou d'un complexe industriel.

Selon l'un des aspects de l'invention, l'installation comporte une borne de recharge électrique ou plusieurs bornes de recharge électrique configurées pour la recharge d'un ou plusieurs véhicules électriques garés sur les places couvertes par l'installation.

Selon l'un des aspects de l'invention, la borne de recharge comporte une prise de recharge à brancher sur un véhicule électrique.

Selon l'un des aspects de l'invention, un circuit électrique permet de relier les panneaux solaires à un onduleur capable de produire de l'électricité compatible avec une recharge pour véhicule électrique.

Selon l'un des aspects de l'invention, l'onduleur est disposé sur l'installation.

Par exemple, l'onduleur est attaché à au pilier central de cette installation.

Selon l'un des aspects de l'invention, l'onduleur peut être placé à une hauteur suffisante pour être plus haut que la taille moyenne d'une personne.

Selon l'un des aspects de l'invention, l'onduleur est placé par exemple à 2 m ou plus du sol.

Selon l'un des aspects de l'invention, la borne de recharge est posée sur un socle de l'installation.

Selon l'un des aspects de l'invention, la borne de recharge est posée contre le pilier. Les bornes de recharge très rapide, plus encombrantes, pourraient être placées longitudinalement loin du pilier, à une distance égale ou inférieure à la largeur d'une place de parking. Les bornes de recharge compactes, notamment quand elles sont alimentées directement par les batteries avec un courant continu sans passer par l'onduleur, peuvent être intégrées dans le pilier central.

Selon l'un des aspects de l'invention, le toit est configuré pour couvrir 1 ou 4 places de parking pour véhicules automobiles.

Selon l'un des aspects de l'invention, chaque partie de toit est configuré pour recevoir une pluralité de panneaux solaires, par exemple 4 ou 5 panneaux solaires.

Selon l'un des aspects de l'invention, le toit présente une longueur totale d'au moins 2 mètres, mesurée parallèlement à la poutre longitudinale.

Selon l'un des aspects de l'invention, le toit présente une dimension mesurée suivant la poutre transversale d'au moins 4 mètres, ou 5 mètres.

Selon l'un des aspects de l'invention, chaque panneau solaire est configuré pour avoir une densité de puissance au minimum de 400 Wp (Watt-peak) par panneau.

Selon l'un des aspects de l'invention, cette densité de puissance peut être choisie à 700 Wp nominal.

Selon l'un des aspects de l'invention, le toit est incliné et présente un bord inférieur qui est le plus proche du sol lorsque l'installation est montée. Ce bord inférieur est à une hauteur d'environ 4,2 mètres du sol. Ceci permet de répondre à des normes de sécurité.

Selon l'un des aspects de l'invention, le pilier central est creux et définit un logement pour recevoir un ou plusieurs modules de batterie.

Selon l'un des aspects de l'invention, chaque module de batterie est relié à l'onduleur, lui-même relié aux panneaux solaires qui servent alors à la recharge électrique du ou des modules de batterie.

Selon l'un des aspects de l'invention, le module de batterie peut être à technologie au sodium. En variante, il est utilisé une technologie de batterie au lithium.

Selon l'un des aspects de l'invention, les structures alvéolées sont configurées pour définir les différents logements recevant les modules de batterie.

Selon l'un des aspects de l'invention, le pilier central comprend des logements sur plusieurs étages pour recevoir les modules de batterie.

Selon l'un des aspects de l'invention, le pilier central est fixé sur un socle au moins partiellement enterré.

Selon l'un des aspects de l'invention, le socle est configuré pour être enterré dans le sol et est de relativement faible hauteur, cette hauteur étant notamment inférieure à 600 mm.

Selon l'un des aspects de l'invention, l'installation comporte un système d'ancrage enterré configuré pour maintenir le socle du pilier central ancré dans le sol.

Selon l'un des aspects de l'invention, le dispositif d'ancrage comporte des câbles enterrés avec chacun une extrémité solidaire du socle de l'installation et une autre extrémité accrochée à une cheville configurée pour être fixée en profondeur dans le sol.

Selon l'un des aspects de l'invention, les câbles sont au nombre de quatre. Notamment les câbles d'ancrage servent également de conduit de masse électrique pour l'installation. Les câbles d'ancrage d'une des installations pourraient être plus longs que les autres de plusieurs mètres de profondeur pour servir de paratonnerre. Ces ancrages particuliers sont reliés par câblage à un mât sur le toit pour canaliser la foudre.

Selon l'un des aspects de l'invention, le socle de l'installation déborde sur une certaine hauteur du sol lorsque le socle est fixé au sol.

Selon l'un des aspects de l'invention, le socle présente, sur cette hauteur émergée, une forme choisie pour servir d'arrêt à une roue d'un véhicule.

Ainsi lorsqu'un véhicule s'approche du pilier central pour se garer sous le toit, la roue de la voiture la plus proche du pilier central vient buter contre le socle de sorte à signaler au conducteur qu'il ne peut pas s'approcher davantage du pilier central.

Ceci constitue une sécurité fiable pour éviter qu'un véhicule ne percute le pilier central de l'installation. Si besoin, des poteaux de sécurité supplémentaires pourront être ajoutés.

Selon l'un des aspects de l'invention, le socle présente une bordure en croix configurée pour servir d'arrêt pour une roue de véhicule.

Selon l'un des aspects de l'invention, l'installation utilise des matériaux durables tels que le bois et du métal.

Selon l'un des aspects de l'invention, les pièces de l'installation peuvent en outre être réutilisées, réparées ou recyclées.

Selon l'un des aspects de l'invention, le bois est utilisé dans les poutres et piliers et peut être un bois traité en utilisant de l'huile de cuivre sous haute pression dans une autoclave.

Selon l'un des aspects de l'invention, les panneaux de bois sous les panneaux solaires et qui forment le caisson sont protégés par un bouclier métallique pour éviter un stress thermique sur ces panneaux en bois.

Selon l'un des aspects de l'invention, l'installation comporte un système de nettoyage des panneaux solaires.

Selon l'un des aspects de l'invention, le système de nettoyage est de type hydraulique.

Selon l'un des aspects de l'invention, le système de nettoyage comporte un organe de projection de liquide sur le ou les panneaux solaires.

Selon l'un des aspects de l'invention, cet organe de projection de liquide comprend un tube placé le long d'un bord supérieur du toit, ou de chaque partie de toit.

Selon l'un des aspects de l'invention, le tube est muni d'une fente, notamment longitudinale, le long de ce bord supérieur du toit.

Selon l'un des aspects de l'invention, un liquide est projeté à travers cette fente, notamment sous pression modérée, en vue de nettoyer la surface des panneaux solaires, notamment sans les endommager.

Selon l'un des aspects de l'invention, le tube est relié à une réserve d'eau, par exemple une réserve de récupération d'eau de pluie.

Selon l'un des aspects de l'invention, la liaison entre la réserve et le ou les tubes de projection est réalisée par un conduit logé dans le pilier central.

Selon l'un des aspects de l'invention, le conduit, de préférence rigide, est en matière plastique renforcée, par exemple renforcée avec des fibres de verre. Le conduit peut également servir comme renfort du pilier central en se liant aux poutres en bois à travers des plaques composites alvéolées.

Selon l'un des aspects de l'invention, le conduit s'étend depuis le bas jusqu'en haut du pilier central.

Par exemple, le conduit présente une hauteur d'au moins 80 % ou 90% de la hauteur totale du pilier central. Avantageusement le volume d'eau dans le conduit ne dépasse les 90% afin de contenir le volume d'une eau gelée. Le choix des matériaux composites du conduit ou réservoir doit lui permettre de résister aux contraintes de gels tout en participant à la rigidité de la structure du pilier principal.

Selon l'un des aspects de l'invention, un ou plusieurs tuyaux peuvent être prévus pour connecter le tube de projection d'eau à ce conduit vertical.

Selon l'un des aspects de l'invention, le ou les tuyaux sont disposés dans le caisson qui supporte le ou les panneaux solaires.

Selon l'un des aspects de l'invention, le système de nettoyage peut comporter deux tubes de projections d'eau, l'un pour l'une des parties du toit et l'autre pour l'autre partie du toit.

Selon l'un des aspects de l'invention, l'installation comporte une pompe à eau configurée pour pomper l'eau de la réserve et la diriger vers le système de nettoyage.

Selon l'un des aspects de l'invention, l'installation comporte une gouttière configurée pour récupérer de l'eau de pluie qui s'écoule sur le toit, et pour diriger l'eau de pluie récupérée dans la réserve du pied central.

Selon l'un des aspects de l'invention, la pompe pour pomper l'eau est de type électrique. Elle peut être activée par un capteur de poussière et/ou à des intervalles de temps prédéfinis.

Selon l'un des aspects de l'invention, l'eau récupérée peut être filtrée avant de rejoindre le réservoir. Avantageusement le niveau d'eau dans le réservoir est contrôlé par un capteur de distance situé sur un boitier de contrôle principale installé en haut du piller central.

Selon l'un des aspects de l'invention, l'installation comprend une ou plusieurs caméras thermiques de contrôle, notamment fixée au sommet du pilier central, et configurée pour mesurer la température à la surface des panneaux solaires.

Selon l'un des aspects de l'invention, cette caméra thermique est montée fixe sur le pilier central ou montée de manière mobile, par exemple pour lui permettre de tourner et d'être orientée vers les panneaux solaires. Notamment les caméras thermiques sont montées fixes sur le pilier central ou la caméra est montée de manière mobile notamment lorsqu'il s'agit d'une seule caméra.

Selon l'un des aspects de l'invention, la caméra thermique permet de surveiller en permanence l'apparition potentielle de points chauds à la surface des panneaux solaires.

Les points chauds peuvent représenter un danger pour l'installation. La caméra thermique permet éventuellement de détecter la présence d'animaux (oiseaux, rongeurs, insectes) qui peuvent endommager l'installation à travers le dépôt de déchets, de nids ou en rongeant les câbles. La détection sera transmise à un module électronique qui déclenche par exemple un son repoussoir des animaux. Elle peut également contribuer à alerter sur une action de malveillance humaine (vol, casse). Des capteurs de température sont éventuellement utilisés pour surveiller la température dans des endroits le nécessitant.

Selon l'un des aspects de l'invention, l'installation comprend une unité de commande configurée pour recevoir des informations provenant de la caméra thermique et déclencher une alerte lorsqu'un point chaud a été détecté sur l'un des panneaux solaires.

Selon l'un des aspects de l'invention, le toit comporte un système d'alerte d'incendie configuré pour générer une alerte en cas de feu ou de température anormale sur le toit.

Selon l'un des aspects de l'invention, le système d'alerte d'incendie comprend des fils qui serpente sous les panneaux solaires.

Selon l'un des aspects de l'invention, ces fils sont configurés pour fondre en cas de forte température.

La fonte du fil crée un court-circuit, ce qui permet de déclencher une alerte. Les fils pourront également être reliés au boitier de commande pour assurer des pré-alertes (par exemple par messagerie, téléphone, ...).

Selon l'un des aspects de l'invention, les fils du système d'alerte d'incendie sont placés sur le chemin de l'écoulement d'air sous les panneaux solaires de sorte que ses fils génèrent des turbulences dans cet écoulement de l'air favorisant un meilleur échange thermique entre l'air et les panneaux solaires. Les fils sont notamment retenus par des dispositifs sur la partie basse des caissons afin de rester à une distance contrôlée et suffisante des panneaux solaires.

Il est possible de prévoir des éléments de perturbation autre que ces fils ou en complément de ces fils.

L'invention concerne également un ensemble d'installations comportant une pluralité d'installations telles que décrites plus haut, ces installations étant notamment disposées côte à côte.

Par exemple, les poutres longitudinales sont placées les unes dans le prolongement des autres.

Ainsi il est possible de récupérer de l'air chauffé au bout de cette succession de poutres longitudinales.

Il est ainsi possible de créer une grande surface de panneaux solaires abritant plusieurs places de parking.

La récupération de calories grâce à l'invention peut par exemple servir au chauffage de bâtiments grâce à l'air circulant sous les panneaux solaires.

L'air qui sert au transport de calories issues des panneaux solaires pourraient être remplacé par tout autre fluide approprié, par exemple un liquide.

L'invention permet une solution modulaire en termes de montage des installations, chaque installation pouvant être autonome.

L'invention permet notamment de disposer côte à côte des installations identiques avec un nombre choisi pour couvrir des besoins prédéterminés. Ceci permet notamment de ne pas recourir à un système centralisé sensible à chaque défaut partiel de l'installation.

Selon l'un des aspects de l'invention, chaque installation est autonome en énergie pour son fonctionnement.

Selon l'un des aspects de l'invention, chaque installation est autonome en termes de contrôle électronique.

Selon l'un des aspects de l'invention, chaque installation est mécaniquement autonome.

L'eau de pluie récupérée peut être utilisée pour laver les voitures, pour refroidir les bornes de recharge, les batteries, l'onduleur ou alimenter des sanitaires des bâtiments environnants.

L'installation peut comporter des dispositifs lumineux d'information ou d'alerte qui sont alimentés électriquement par les modules de batterie.

L'installation peut comporter une unité de commande telle qu'un ordinateur, capable de collecter les informations provenant des différents capteurs et équipements de l'installation.

Les transmissions d'information peuvent être réalisées de manière non filaire en utilisant un protocole de cryptage vers une antenne centrale.

L'installation peut comporter un écran configuré pour afficher des informations, par exemple sur la qualité de l'air ou sur la météo.

L'installation est particulièrement ergonomique.

L'invention permet de recharger plusieurs véhicules à la fois, que ces véhicules soient garés vers l'avant ou vers l'arrière.

L'installation peut être équipée d'un ou plusieurs écrans d'affichage, par exemple d'information ou de publicité, notamment dans le cas des parkings de centres commerciaux.

L'installation peut être équipée de détecteurs ultrasons de présence des véhicules afin d'identifier les places libres de stationnement.

Les places de stationnement pourront être réservées par des applications dans les véhicules ou les téléphones portables.

Selon l'un des aspects de l'invention, l'installation est équipée d'un dispositif de régulation de la température pour éviter le gel de l'eau du réservoir en hiver et permettre un fonctionnement optimal des batteries nécessaire, notamment pour la technologie lithium fer phosphate. Le chauffage est réalisé par câble autorégulateur ou de simple résistance électrique entourant le réservoir. Le refroidissement de l'eau du réservoir et donc des batteries qui l'entourent est réalisé par la circulation de l'eau sur les panneaux solaires durant la nuit.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig 1] La figure 1 est une représentation en perspective d'un ensemble pour parking comprenant plusieurs installations selon un exemple de réalisation de l'invention ;
[Fig. 2] La figure 2 est une vue selon une direction différente, de l'ensemble pour parking de la figure 1 ;
[Fig. 3] La figure 3 est une représentation en perspective, d'une installation de l'ensemble pour parking de la figure 1 ;
[Fig. 4] La figure 4 est une représentation du pilier central de l'ensemble pour parking de la figure 1 ;
[Fig. 5] La figure 5 est une représentation d'un caisson de l'installation de la figure 3 ;
[Fig. 6] La figure 6 est une représentation du caisson de la figure 6, en vue depuis le dessous ;
[Fig. 7] La figure 7 est une représentation en coupe de l'installation de la figure 3 ;
[Fig. 8] La figure 8 est une représentation du système de nettoyage de l'installation de la figure 3 ;
[Fig. 9] La figure 9 est une représentation de l'intérieur du pilier central de l'installation de la figure 3 ;
[Fig. 10] La figure 10 est une représentation de l'intérieur de la poutre longitudinale de l'installation de la figure 3 ;
[Fig. 11] La figure 11 est une représentation d'une borne de recharge de l'installation de la figure 3 ;
[Fig. 12] La figure 12 est une représentation d'un câble chauffant pour l'eau de l'installation de la figure 3 ;
[Fig. 13] La figure 13 est une représentation d'une installation avec une disposition de partie de toit en Y ;
[Fig. 14] La figure 14 est une représentation d'un caisson avec des fente se collecte de section variable.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

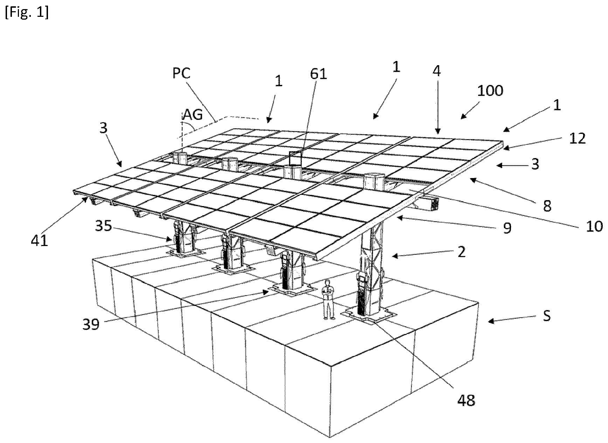

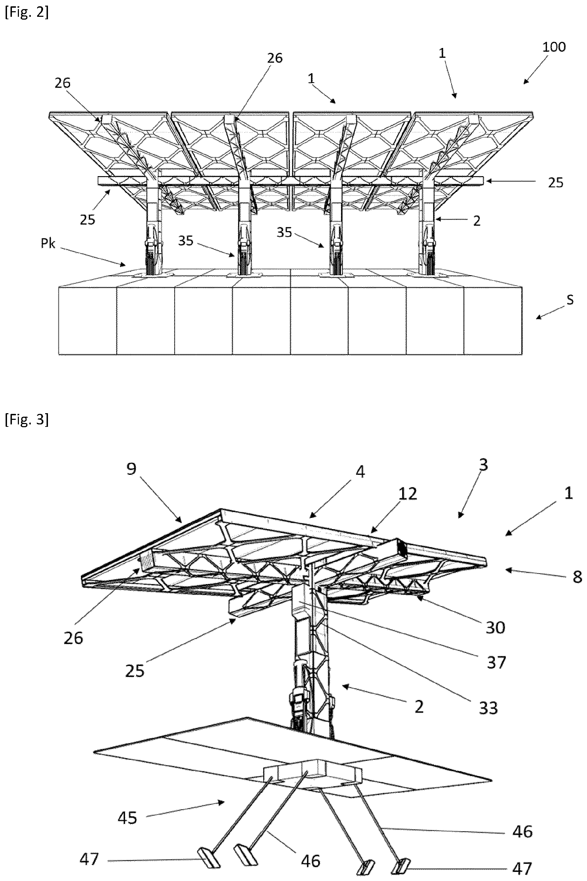

On a représenté, sur les figures 1 et 2, un ensemble 100 comportant une pluralité d'installations à production d'énergie 1 selon un exemple de réalisation de l'invention, ces installations 1 étant disposées côte à côte.

Les installations 1 sont placées sur un parking, par exemple d'un centre commercial, d'une gare, d'un aéroport ou d'un complexe industriel.

Chaque installation à production d'énergie 1 est configurée pour être installée sur un sol S, et comporte un pilier central 2 configuré pour porter un toit 3 pourvu de panneaux solaires 4.

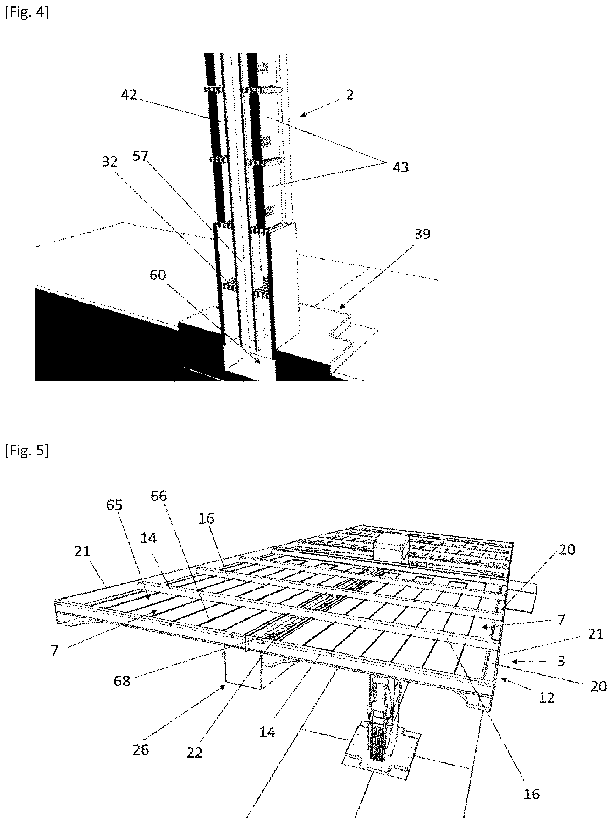

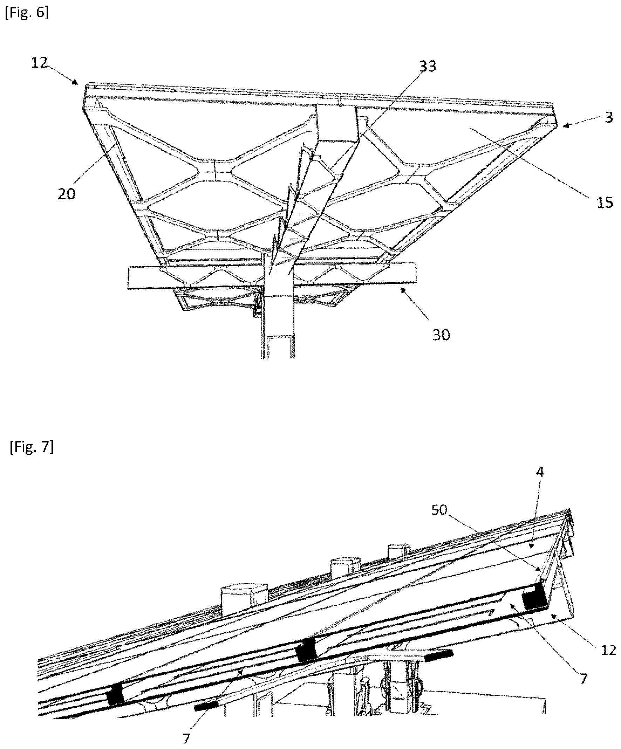

Le toit 3 comporte des canaux de circulation d'air 7 s'étendant sous les panneaux solaires 4 pour permettre à l'air dans chaque canal 7 d'être chauffé par la chaleur dégagée par les panneaux solaires 4, comme illustré sur la figure 5 et 7.

Chaque toit 3 est réalisé en deux parties 8 et 9 disposées de part et d'autre du pilier central 2.

Les deux parties 8 et 9 du toit 3 sont parallèles et sont dans le prolongement l'une de l'autre.

Les deux parties 8 et 9 de toit s'étendent suivant un plan commun PC incliné par rapport au pilier 2.

Le plan commun PC est incliné par rapport au pilier 2 d'un angle AG compris entre 70° et 90°, notamment d'un angle d'environ 85°.

Les deux parties 8 et 9 du toit sont espacées l'une de l'autre par une ouverture 10.

Le haut du pilier 2 s'étend à travers cette ouverture 10.

Cette ouverture 10 entre les deux parties de toit permet en outre au vent de s'écouler dans cette ouverture 10 de sorte à casser les efforts que pourrait exercer un vent fort sur l'installation.

Les deux parties 8 et 9 du toit 3 présente une superficie identique et présentent un pourtour rectangulaire.

Chaque toit 3 comporte au moins un caisson 12 configuré pour soutenir les panneaux solaires 4. La largeur du caisson 12 ainsi que celle des panneaux solaires 4 sont ajustables (par exemple en étant modulaires) pour s'adapter aux normes de largeurs de places de parking, qui peuvent varier d'une région à une autre.

Chaque partie 8, 9 du toit comporte son propre caisson 12 sur lequel sont montés les panneaux solaires 4.

Le caisson 12 comporte des appuis métalliques 14 sur lesquels sont posés les panneaux solaires. Par exemple, le caisson 12 comporte des appuis notamment métalliques 14 sur lesquels sont posés les panneaux solaires sur la partie supérieure et un panneau 15 en laminé haute pression, ou autre matière biosourcée, sur la partie inférieure, comme illustré sur la figure 6.

Ces appuis 14 sont formés notamment par un rebord périphérique du caisson 12.

Les appuis 14 peuvent également être formé par des barreaux transversaux 16 disposés à différents emplacements du caisson 12.

Les barreaux transversaux 16 d'appui sont rectilignes et disposés de manière parallèle et équidistantes entre elles.

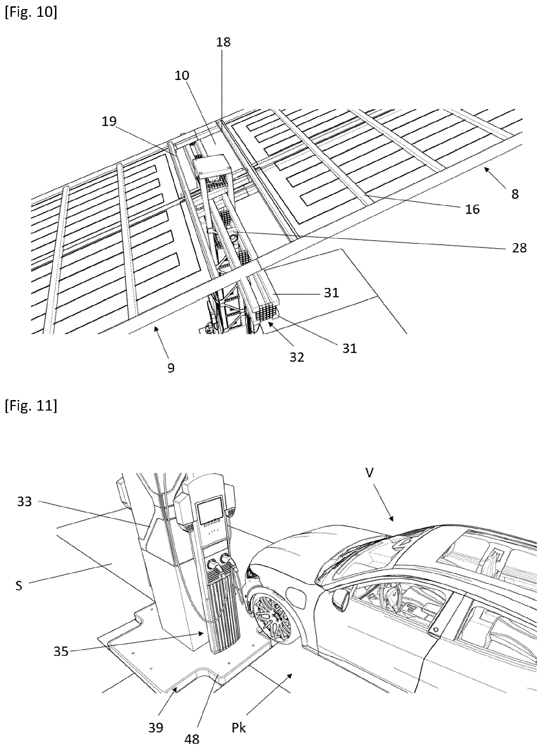

L'ouverture 10 entre les deux parties 8, 9 de toit est formée entre deux bords rectilignes 18, 19 parallèles en regard de ces parties 9, 9 de toit, et les barreaux transversaux 16 sont parallèles à ces bords, comme illustré sur la figure 10.

Les panneaux solaires 4 reposent ainsi sur le rebord périphérique et sur les barreaux transversaux 16 qui se trouvent alors sous les panneaux solaires.

Chaque caisson 12 comporte des fentes d'entrée d'air 20 configurées pour permettre à de l'air de s'écouler à l'intérieur du caisson 12 et de permettre à l'air d'être chauffé par les panneaux solaires 4 qui ferment le caisson 12. Une grille à mailles suffisamment fines peut être disposée sur les fentes d'entrée 20 pour filtrer tout objet ou corps extérieur. Des barres transversales extérieures soutenant les caissons 12 sont configurées pour protéger les fentes d'admission d'air contre l'infiltration d'eau de pluie.

Chaque fente d'entrée d'air 20 s'étend le long d'un bord 21 du caisson 12.

Chaque caisson 12 comporte des paires de fentes d'entrée d'air 20 disposées le long de deux côtés 21 opposés du caisson 12. Pour les panneaux d'extrémité, une fente supplémentaire pourrait être ajoutée. Les fentes peuvent être de mêmes dimensions ou différentes les unes des autres.

Le caisson 12 comporte une fente de collecte de l'air 22 configurée pour permettre l'évacuation de l'air provenant des fentes d'entrée 20 et ayant circulé dans le caisson 12 en été chauffé par les panneaux solaires 4, comme illustré sur la figure 5.

La fente d'entrée d'air 20 présente une forme longiligne.

La fente de collecte d'air 22 présente une forme longiligne.

Les fentes d'entrée d'air 20 sont alignées le long de chaque côté 21 du caisson 12. D'autres fentes d'entrée secondaires peuvent être placées perpendiculairement aux fentes de collecte.

Les fentes d'entrée d'air 20 et les fentes de collecte 22 sont parallèles entre elles, et sont perpendiculaires aux barreaux transversaux 16 d'appui pour les panneaux solaires.

Les fentes de collecte 22 sont situées à équidistance des fentes d'entrée d'air 20.

L'installation 1 comporte en outre une poutre longitudinale 25 se raccordant au pilier central vertical 2 et la poutre longitudinale 25 s'étend dans l'espace/ouverture 10 entre les deux parties 8, 9 du toit, parallèlement aux deux bords 21 du toit.

Dans l'ensemble 100 de plusieurs installations 1, les poutres longitudinales 25 sont placées les unes dans le prolongement des autres.

Ainsi il est possible de récupérer de l'air chauffé au bout de cette succession de poutres longitudinales 25.

L'installation 1 comporte encore une poutre transversale 26 se raccordant au pilier central 2 et portant les deux parties 8, 9 de toit.

L'installation 1 comprend ainsi le pilier central 2 qui porte la poutre longitudinale 25 et la poutre transversale 26.

Il est ainsi possible de former l'installation 1 avec un nombre total de pilier/poutres égal à trois.

La poutre longitudinale 25 et la poutre transversale 26 se croisent à angle droit.

La fente d'évacuation/collecte d'air 22 dans le caisson 12 du toit est ouverte sur la poutre transversale 26 qui est creuse.

Les poutres 25 et 26 sont creuses ainsi que le pilier central 2, de sorte que l'air ayant circulé dans le caisson 12 et qui est chauffé par les panneaux solaires 4 circule à travers la fente d'évacuation d'air 22 en direction de la poutre transversale 26.

Chaque poutre transversale 26 est creuse et forme ainsi, en entier ou en partie, un canal d'évacuation de l'air chauffé. Chaque poutre transversale 26 peut être équipée d'un ventilateur 28 (voir figure 10) pour évacuer l'air vers un conduit principal, dans la poutre longitudinale 25.

Ce canal d'évacuation dans la poutre transversale 26 se prolonge dans la poutre longitudinale 25.

La poutre longitudinale 25 est configurée pour évacuer l'air qui y circule vers un système de récupération de chaleur de l'air. Selon l'un des aspects de l'invention, ce système comporte par exemple une pompe à chaleur placée par exemple dans un bâtiment pour le chauffer.

Le ventilateur 28 est électrique, et configuré pour aspirer l'air vers le canal de circulation d'air dans la poutre longitudinale 25.

Cette aspiration d'air permet de créer l'écoulement d'air depuis les fentes d'entrée d'air 20 sur le caisson 12 du toit vers le canal de la poutre longitudinale 25.

Le ventilateur 28 est placé au sein de la poutre longitudinale 25. D'autres ventilateurs peuvent être aussi placés sur chaque poutre transversale 26.

Le pilier 2 et/ou la poutre longitudinale 25 et/ou la poutre transversale 26 sont réalisées avec chacun un assemblage de plaques à base de matériaux biosourcés, bois ou autres tel que des laminés à haute pression de papier et de résines destinés à des bardages extérieurs.

L'assemblage de plaques 30 forment une enveloppe externe du pilier 2 et/ou de la poutre longitudinale 25 et/ou de la poutre transversale 26.

Comme on peut le voir sur la figure 10, l'assemblage 30 comporte en outre des éléments de poutre 31 en bois, disposés de manière parallèle, aux quatre coins du pourtour rectangulaire, et entre lesquels sont disposées les plaques. Les éléments de poutre 31 peuvent être également en acier, notamment pour le pilier central 2 où l'échange de chaleur n'est pas critique.

Pour le pilier central 2, ces éléments de poutre 31 mesurent par exemple 3 à 6 mètres ou plus.

Dans l'espace intérieur de cette enveloppe, sont disposées des structures alvéolées 32, en matière plastique.

Chaque structure alvéolée 32 présente un pourtour rectangle ou carré, et présente une forme de grille ou en nid d'abeille.

La structure alvéolée 32 occupe toute une section intérieure du pilier 2 ou de la poutre 25, 26.

Plusieurs structures alvéolées 32 sont prévues dans le pilier 2 creux et/ou la poutre creuse 25, 26, à distance les unes des autres.

Les structures alvéolées 32 peuvent être en matière plastique renforcée, notamment avec des fibres de verre.

L'assemblage de plaques 30 en bois est renforcé par des renforts 33, notamment des renforts 33 métalliques.

Les renforts 33 sont sur une face externe de l'assemblage de plaques 30. En variante, les renforts 33 peuvent être sur la face interne, notamment pour des raisons esthétiques ou fonctionnelles quand la conduction thermique n'est pas affectée.

Les renforts 33 métalliques peuvent représenter une forme en V ou en croix, et sont configurés pour renforcer mécaniquement le pilier 2 et/ou la poutre longitudinale 25 et/ ou la poutre transversale 26.

Les renforts 33 métalliques peuvent également servir pour interconnecter la poutre longitudinale 25 et la poutre transversale 26 au pilier central 2.

L'installation 1 comporte une borne de recharge électrique 35 ou plusieurs bornes de recharge électrique 35 configurées pour la recharge d'un ou plusieurs véhicules électriques V garés sur les places Pk couvertes par l'installation 1, comme illustré sur a figure 11.

La borne de recharge 35 comporte une prise de recharge à brancher sur un véhicule électrique V.

Un circuit électrique permet de relier les panneaux solaires 4 à un onduleur 37 capable de produire de l'électricité compatible avec une recharge pour véhicule électrique.

L'onduleur 37 est disposé sur l'installation 1, étant attaché à au pilier central 2 de cette installation (voir figure 3).

L'onduleur 37 peut être placé à une hauteur suffisante pour être plus haut que la taille moyenne d'une personne.

L'onduleur 37 est placé par exemple à 2 mètres ou plus du sol.

La borne de recharge 35 est posée sur un socle 39 de l'installation 1, contre le pilier 2.

Le toit 3 est configuré pour couvrir une ou quatre places de parking Pk pour véhicules automobiles.

Chaque partie 8, 9 de toit est configuré pour recevoir une pluralité de panneaux solaires, par exemple 4 ou 5 panneaux solaires.

Le toit 3 présente une longueur totale d'au moins 2 mètres, mesurée parallèlement à la poutre longitudinale 25.

Chaque toit 3 présente une dimension mesurée suivant la poutre transversale 26 d'au moins 4 mètres, ou 5 mètres.

Chaque panneau solaire 4 est configuré pour avoir une densité de puissance au minimum de 400 Wp (Watt-peak) par panneau, choisie à 700 Wp nominal par exemple.

Le toit 3 est incliné et présente un bord inférieur 41 qui est le plus proche du sol lorsque l'installation 1 est montée. Ce bord inférieur 41 est à une hauteur d'environ 4,2 mètres du sol.

Le pilier central 2 est creux et définit un logement 42 pour recevoir plusieurs modules de batterie 43.

Chaque module de batterie 43 est relié à l'onduleur 37, lui-même relié aux panneaux solaires 4 qui servent alors à la recharge électrique du module de batterie 43.

Le module de batterie 43 peut être à technologie au sodium.

Les structures alvéolées 32 sont configurées pour définir les différents logements 42 recevant les modules de batterie 43.

Le pilier central 2 comprend des logements 42 sur plusieurs étages pour recevoir les modules de batterie 43, comme on peut le voir sur la figure 4.

Le pilier central 2 est fixé sur au socle 39.

Le socle 39 est configuré pour être enterré dans le sol et est de relativement faible hauteur, cette hauteur étant notamment inférieure à 600 mm.

L'installation 1 comporte un système d'ancrage 45 enterré configuré pour maintenir le socle 39 du pilier central 2 ancré dans le sol, comme illustré sur la figure 3.

Le dispositif d'ancrage 45 comporte des câbles 46 enterrés avec chacun une extrémité solidaire du socle 39 de l'installation et une autre extrémité accrochée à une cheville 47 configurée pour être fixée en profondeur dans le sol.

Les câbles 46 sont au nombre de quatre. Notamment les câbles d'ancrage servent également de conduit de masse électrique pour l'installation. Les câbles d'ancrage 46 d'une des installations pourraient être plus longs que les autres de plusieurs mètres de profondeur pour servir de paratonnerre. Ces ancrages particuliers sont reliés par câblage à un mât sur le toit 3 pour canaliser la foudre.

Le socle 39 de l'installation déborde sur une certaine hauteur du sol lorsque le socle 39 est fixé au sol.

Le socle 39 présente, sur cette hauteur émergée, une forme choisie pour servir d'arrêt à une roue d'un véhicule.

Ainsi lorsqu'un véhicule s'approche du pilier central 2 pour se garer sous le toit 3, la roue de la voiture la plus proche du pilier central 2 vient buter contre le socle 39 de sorte à signaler au conducteur qu'il ne peut pas s'approcher davantage du pilier central 2.

Ceci constitue une sécurité fiable pour éviter qu'un véhicule ne percute le pilier central 2 de l'installation.

Le socle 39 présente une bordure 48 en croix configurée pour servir d'arrêt pour une roue de véhicule.

L'installation 1 utilise des matériaux durables tels que le bois et/ou du métal.

Selon l'un des aspects de l'invention, les panneaux de bois sous les panneaux solaires et qui forment le caisson 12 sont protégés par un bouclier métallique pour éviter un stress thermique sur ces panneaux en bois.

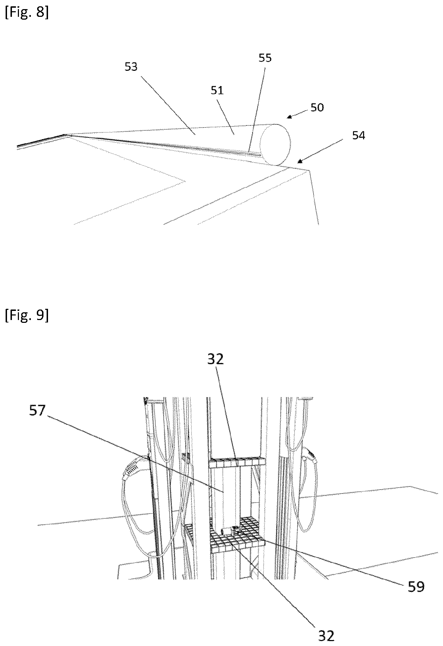

L'installation 1 comporte un système de nettoyage 50 des panneaux solaires, de type hydraulique, comme illustré sur la figure 8.

Le système de nettoyage 50 comporte un organe 51 de projection de liquide sur les panneaux solaires 4.

Cet organe 51 de projection de liquide comprend un tube 53 placé le long d'un bord supérieur 54 du toit 3.

Le tube 53 est muni d'une fente 55 longitudinale, le long de ce bord supérieur 54 du toit 3.

Un liquide est projeté à travers cette fente 55, sous pression modérée, en vue de nettoyer la surface des panneaux solaires 4, sans les endommager.

Le tube 53 est relié à une réserve d'eau 60, ici une réserve de récupération d'eau de pluie.

La liaison entre la réserve 60 et les tubes 53 de projection est réalisée par un conduit 57 logé dans le pilier central 2, visible sur les figures 4 et 9.

Le conduit 57, rigide, est en matière plastique renforcée, par exemple renforcée avec des fibres de verre. Le conduit 57 peut également servir comme renfort du pilier central 2 en se liant aux poutres en bois à travers des plaques composites alvéolées.

Le conduit 57 s'étend depuis le bas jusqu'en haut du pilier central 2.

Par exemple, le conduit 57 présente une hauteur d'au moins 80 % ou 90% de la hauteur totale du pilier central 2. Avantageusement le volume d'eau dans le conduit ne dépasse les 90% afin de contenir le volume d'une eau gelée. Le choix des matériaux composites du conduit ou réservoir doit lui permettre de résister aux contraintes de gels tout en participant à la rigidité de la structure du pilier principal.

Plusieurs tuyaux peuvent être prévus pour connecter le tube 53 de projection d'eau à ce conduit vertical 57.

Ces tuyaux sont disposés dans les caissons 12.

Le système de nettoyage 50 peut comporter deux tubes de projections d'eau, l'un pour l'une des parties 8 du toit 3 et l'autre pour l'autre partie 9 du toit 3.

L'installation 1 comporte une pompe à eau 59 configurée pour pomper l'eau de la réserve 60 et la diriger vers le système de nettoyage 50.

L'installation 1 comporte une gouttière 68 configurée pour récupérer de l'eau de pluie qui s'écoule sur le toit 3, et pour diriger l'eau de pluie récupérée dans la réserve du pied central.

La pompe 59 pour pomper l'eau est de type électrique. Elle peut être activée par un capteur de poussière et/ou à des intervalles de temps prédéfinis, ou durant la nuit en été pour refroidir l'eau du réservoir chauffé par la chaleur dégagée par les batteries.

L'eau récupérée peut être filtrée avant de rejoindre le réservoir 60. Avantageusement le niveau d'eau dans le réservoir 60 est contrôlé par un capteur de distance situé sur un boitier de contrôle principale installé en haut du piller central.

L'installation 1 comprend une ou plusieurs caméras thermiques de contrôle 61, notamment fixée au sommet du pilier central 2, et configurée pour mesurer la température à la surface des panneaux solaires 4.

Cette caméra thermique 61 est montée fixe sur le pilier central 2 ou montée de manière mobile, par exemple pour lui permettre de tourner et d'être orientée vers les panneaux solaires. Notamment les caméras thermiques sont montées fixes sur le pilier central 2 ou la caméra est montée de manière mobile notamment lorsqu'il s'agit d'une seule caméra.

La caméra thermique 61 permet de surveiller en permanence l'apparition potentielle de points chauds à la surface des panneaux solaires.

Les points chauds peuvent représenter un danger pour l'installation 1. La caméra thermique 61 permet éventuellement de détecter la présence d'animaux (oiseaux, rongeurs, insectes) qui peuvent endommager l'installation à travers le dépôt de déchets, de nids ou en rongeant les câbles. La détection sera transmise à un module électronique qui déclenche par exemple un son repoussoir des animaux. Elle peut également contribuer à alerter sur une action de malveillance humaine (vol, casse). Des capteurs de température sont éventuellement utilisés pour surveiller la température dans des endroits le nécessitant.

L'installation peut comprendre une unité de commande configurée pour recevoir des informations provenant de la caméra thermique 61 et déclencher une alerte lorsqu'un point chaud a été détecté sur l'un des panneaux solaires.

Le toit 3 comporte un système d'alerte d'incendie 65 configuré pour générer une alerte en cas de feu ou de température anormale sur le toit 3.

Le système d'alerte d'incendie 65 comprend des fils 66 qui serpente sous les panneaux solaires 4.

Ces fils 66 sont configurés pour fondre en cas de forte température.

La fonte du fil crée un court-circuit, ce qui permet de déclencher une alerte. Les fils pourront également être reliés au boitier de commande pour assurer des pré-alertes (par exemple par messagerie, téléphone, ...).

Les fils 66 du système d'alerte d'incendie sont placés sur le chemin de l'écoulement d'air sous les panneaux solaires de sorte que ses fils génèrent des turbulences dans cet écoulement de l'air favorisant un meilleur échange thermique entre l'air et les panneaux solaires. Les fils 66 sont notamment retenus par des dispositifs sur la partie basse des caissons afin de rester à une distance contrôlée et suffisante des panneaux solaires.

Il est possible de prévoir des éléments de perturbation autre que ces fils 66 ou en complément de ces fils.

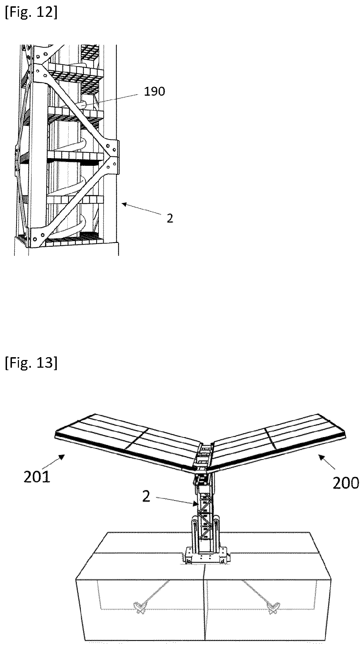

Lorsque la température ambiante est faible ou négative (moins de 5°C par exemple), l'eau du réservoir 60 peut être chauffée électriquement par un câble 190 illustré sur la figure 12, ou une bande chauffante ou par autre moyen pour éviter le gel de l'eau tout en rayonnant de la chaleur pour chauffer les batteries et augmenter ainsi leur performance et prolonger leur durée de vie. En été, l'eau du réservoir 60 chauffée durant la journée par les batteries est refroidie la nuit en la faisant couler sur les panneaux solaires tout en les nettoyant au passage, sachant que le niveau de poussière est généralement plus élevé en été. Le câble 190 forme une spirale autour du conduit 57 logé dans le pilier central 2.

Dans un autre exemple de réalisation de l'invention illustré à la figure 13, les deux parties du toit 200 et 201 s'étendent dans des plans respectifs qui sont sécants, en formant, en profil, un Y avec le pilier central 2. D'une manière générale, la disposition des parties de toit peut être adaptée en fonction de contraintes environnementales et/ou de besoin de récupération d'eau.

Les bornes de recharge rapide dont la puissance dépasse 100kW pourraient être placées loin du mât ou plier central 2.

Dans un exemple, l'installation contenant des batteries au lithium ou sodium dont la capacité pourrait varier de 5kWh à plus de 100 kWh permet le stockage de l'électricité produite par les panneaux solaires ou servir de moyen d'absorber un surplus d'électricité en cas de saturation du réseau durant un excès de production éolienne et photovoltaïque. Cette électricité pourrait être réinjectée dans le réseau lorsque la demande l'exige.

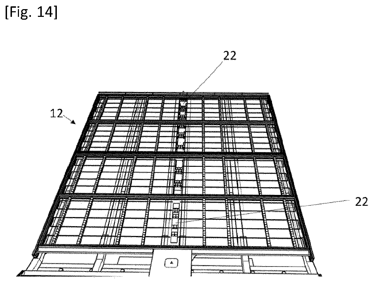

Dans une variante illustrée en figure 14, les sections des fentes 22 peuvent varier pour une meilleure uniformité de l'air dans le caisson 12. Notamment, plus on est loin du pilier plus la fente de collecte 22 est large pour compenser les pertes de charges.

## Revendications

1. Installation (1) à production d'énergie configurée pour être installée notamment sur un sol, notamment sur un parking, et comportant un pilier central (2) configuré pour porter au moins un toit (3) pourvu d'au moins un panneau solaire (4), le toit (3) comportant au moins un canal de circulation d'air (7) s'étendant au moins partiellement sous le panneau solaire (4) pour permettre à l'air dans le canal d'être chauffé par la chaleur dégagée par le panneau solaire (4).

2. Installation selon la revendication précédente, dans laquelle le toit (3) est réalisé en deux parties (8, 9) disposées de part et d'autre du pilier central (2), ces deux parties du toit (3) étant par exemple parallèles et notamment dans le prolongement l'une de l'autre suivant un plan incliné par rapport au pilier, et dans laquelle les deux parties (8, 9) du toit (3) sont espacées l'une de l'autre par une ouverture (10).

3. Installation selon l'une des revendications précédentes, dans laquelle le toit (3) comporte au moins un caisson (12) configuré pour soutenir le ou les panneaux solaires, et le caisson 12 comporte notamment des appuis (14), notamment métalliques, sur lesquels sont posés les panneaux solaires.

4. Installation selon la revendication précédente, dans laquelle chaque caisson (12) comporte au moins une fente d'entrée d'air (20) configurée pour permettre à de l'air de s'écouler à l'intérieur du caisson (12) et de permettre à l'air d'être chauffé par le ou les panneaux solaires (4) qui ferment le caisson (12), la fente d'entrée d'air (20) s'étendant notamment le long d'un bord du caisson 12.

5. Installation selon la revendication précédente, dans laquelle le caisson (12) comporte une fente (22) de collecte de l'air configurée pour permettre l'évacuation de l'air provenant de la fente ou des fentes d'entrée (20) et ayant circulé dans le caisson (12) en été chauffé par le ou les panneaux solaires (4).

6. Installation selon la revendication 2 et éventuellement l'une des autres revendications précédentes, dans laquelle l'installation (1) comporte en outre une poutre longitudinale (25) se raccordant au pilier central (2) et la poutre longitudinale (25) s'étend dans un espace entre les deux parties (8, 9) du toit (3), notamment parallèlement aux deux bords en regard des deux parties de toit (3).

7. Installation selon la revendication précédente, dans laquelle l'installation comporte encore une poutre transversale (26) se raccordant au pilier central (2) et portant les deux parties de toit (3), et notamment une fente d'évacuation d'air dans un caisson (12) du toit (3) étant ouverte sur la poutre transversale (26) qui est creuse.

8. Installation selon la revendication précédente, dans laquelle les poutres sont creuses ainsi que le pilier central (2), de sorte que l'air ayant circulé dans un caisson (12) et qui est chauffé par le ou les panneaux solaires circule à travers une fente d'évacuation d'air en direction de la poutre transversale (26).

9. Installation selon la revendication précédente, dans laquelle l'installation comporte un ventilateur (28), notamment un ventilateur électrique, configuré pour aspirer l'air vers un canal de circulation d'air dans la poutre longitudinale (25).

10. Installation selon l'une des revendications précédentes, dans laquelle le pilier (2) et/ou la poutre longitudinale (25) et/ou la poutre transversale (26) sont réalisées avec chacun un assemblage de plaques notamment à base de matériaux biosourcés, notamment bois.

11. Installation selon la revendication précédente, dans laquelle l'assemblage de plaques forment une enveloppe externe du pilier et/ou de la poutre longitudinale (25) et/ou de la poutre transversale (26), et dans l'espace intérieur de cette enveloppe, sont disposées des structures alvéolées (32), par exemple en matière plastique, l'assemblage de plaques en bois étant notamment renforcé par des renforts 33, notamment des renforts 33 métalliques.

12. Installation selon l'une des revendications précédentes, dans laquelle l'installation comporte une borne de recharge électrique (35) ou plusieurs bornes de recharge électrique configurées pour la recharge d'un ou plusieurs véhicules électriques garés sur les places couvertes par l'installation, et notamment un circuit électrique configuré pour relier les panneaux solaires à un onduleur (37) capable de produire de l'électricité compatible avec une recharge pour véhicule électrique.

13. Installation selon l'une des revendications précédentes, dans laquelle le pilier central (2) est fixé sur un socle (39) au moins partiellement enterré, ce socle (39) de l'installation qui notamment déborde sur une certaine hauteur du sol lorsque le socle (39) est fixé au sol.

14. Installation selon l'une des revendications précédentes, dans laquelle l'installation comporte un système de nettoyage (50) des panneaux solaires, de type hydraulique, avec notamment un organe de projection de liquide sur le ou les panneaux solaires, cet organe de projection de liquide comprenant notamment un tube placé le long d'un bord supérieur du toit (3), ou de chaque partie de toit (3).

15. Ensemble (100) d'installations comportant une pluralité d'installations (1) selon l'une des revendications précédentes, étant notamment disposées côte à côte, avec notamment des poutres longitudinales placées les unes dans le prolongement des autres.
